# EUROPEAN PATENT SPECIFICATION

(11) **EP 4 397 857 B1**
(45) Date of publication and mention of the grant of the patent: **11.03.2026**
(21) Application number: 23150414.3
(22) Date of filing: 05.01.2023
(51) Int. Cl.: F03D 80/40

(54) **WIND TURBINE BLADE WITH A DEICING SYSTEM**
WINDTURBINENSCHAUFEL MIT EINEM ENTEISUNGSSYSTEM
PALE D'ÉOLIENNE AVEC SYSTÈME DE DÉGIVRAGE

(43) Date of publication of application: 10.07.2024
(73) Proprietor: LM Wind Power A/S, 6000 Kolding (DK)
(72) Inventor: SIEBERS, Johnny Kenneth, 6000 Kolding (DK)
(74) Representative: COPA Copenhagen Patents

(56) References cited:
- CN-A- 106 468 246
- US-A1- 2015 204 311
- US-A1- 2019 145 384

## Description

### Technical field

The present invention relates to deicing of wind turbine blades.

### Background of the invention

When wind turbines are operated in cold-weather climates, ice can build up on the wind turbine blades and negatively affect the performance of the wind turbine by disrupting the airflow across the blade. Ice may also result in noise when air flows across the blade. Further, when ice breaks away from blade surfaces, it becomes a hazard. Wind turbine blades in such climates are therefore often provided with systems that mitigate ice formation (anti-icing) or can melt away ice (deicing). Hot-air electro-thermal systems operate on the principle of supplying heated air to the interior of a wind turbine blade, which in turn raises the surface temperature of the blade, thereby reducing ice formation or dislodging already-formed ice on the blade.

It is also known to utilise electrical heating systems embedded in blades and mechanical electro-thermal systems. However, when conductive materials are included in the blade, and especially near the outer surface, there is an increased risk that a lightning strikes into such materials rather than to dedicated lightning receptors. The problem is further exacerbated when conductive material is arranged near the tip of the blade, as this region of the blade is already at higher risk of receiving a lightning strike.

Since wind turbine blades are usually made of fibre-reinforced composite material, it would be advantageous to provide an improved deicing system for fibre-reinforced composite wind turbine blades. Examples of prior art blades are shown in US2015204311A1 and US6338455B1.

### Summary of the invention

A first aspect of the invention provides a wind turbine blade having a suction side shell portion and a pressure side shell portion, each shell portion extending between a leading edge of the wind turbine blade and a trailing edge of the wind turbine blade, the wind turbine blade extending along a longitudinal axis from a root end of the wind turbine blade to a tip end of the wind turbine blade, the wind turbine blade comprising:
- a leading-edge heating element extending along at least a portion of the leading edge of the wind turbine blade, the leading-edge heating element being configured for deicing a corresponding portion of an exterior surface of the leading edge,
- a first plurality of heating strips, each heating strip of the first plurality of heating strips extending in a substantially spanwise direction of the wind turbine blade, the first plurality of heating strips forming part of a first shell portion of the wind turbine blade, wherein the first shell portion is the pressure side shell portion or the suction side shell portion, the first plurality of heating strips being spaced apart from one another and from the leading-edge heating strip in a chordwise direction, each heating strip having a first end and a second end, the first end being closer to the tip end than the second end, each heating strip comprising carbon-fibre yarn and/or tow material, and
- a power source configured to provide electrical power to each heating strip of the first plurality of heating strips in order to generate heating in said each heating strip, said heating being generated by the carbon-fibre yarn and/or tow material.

Such a wind turbine blade allows deicing of the first shell portion downstream from the leading edge of the blade. Ice may attach to the blade there and negatively impact the aerodynamic properties of the blade, leading to a reduced power generation efficiency and to noise. The use of carbon fibre yarn and/or tow has the effect that in addition to providing heating for deicing the blade, the heating strips also contribute mechanical strength, especially if embedded in resin, in which case the heating mat is in fact a fibre-reinforced composite material, wherein i. the first plurality of heating strips comprises a first heating strip and a second heating strip, wherein the first heating strip is closer to the leading edge than the second heating strip and wherein the first heating strip is longer than the second heating strip, or ii. in a direction from the leading edge to the trailing edge, a length of each of the first plurality of heating strips is at most as long or shorter than a preceding heating strip of the first plurality of heating strips.

In preferred embodiments, the first plurality of heating strips is not exposed at the outer surface of the wind turbine blade. That is, the first plurality of heating strips is embedded inside the first shell portion or positioned such that the heating strips are exposed to the inside of the wind turbine blade. As a result, they are protected from the environment. In some embodiments, one or more heating strips in the first plurality of heating strips are embedded in the first shell portion whereas other heating strips in the first plurality of heating strips are exposed to the inside of the wind turbine blade. To provide heating strips exposed to the inside of the wind turbine blade, the heating strips may for instance be glued onto a part of a fibre layer or other layer facing the inside of the wind turbine blade. Heating strips that are embedded are typically embedded during layup of wind turbine blade material, where they are placed between other layers.

In some embodiments, one or more of the first plurality of heating strips comprises one or more carbon fibre yarns/tows that extend from the first end to the second end of the heating strip. This allows individual yarns/tows to carry electricity all along the heating element.

The heating strips may curve slightly in the spanwise direction, for instance to follow the curvature of the trailing edge of the blade. Although being within the scope of the invention, such embodiments are more difficult to manufacture because the heating strips are more complicated to make and the shape of the material surrounding the heating strips in the blade must also be adapted.

In some embodiments, one or more of the yarns/tows for generating heating extend from the first end to the second end of the respective heating strip in a non-straight fashion. In some embodiments, the yarns/tows for generating heating extend from the first end to the second end of the respective heating strip in an undulating fashion, such as in a substantially sinusoidal fashion.

In some embodiments, one or more of the heating strips for generating heating is made of unidirectional carbon fibre. In some embodiments, one or more of the heating strips for generating heating comprise biaxial carbon fibre material.

An advantage of using yarns/tows that extend all the way from the first end to the second end is that the resistance is more consistent from heating strip to heating strip, reducing the need for determining the resistance of the heating strip in order to determine how much heat a given applied voltage will result in. Biaxial carbon fibre material comprises overlapping but noncontinuous fibres, and the resistance depends on how much the fibres in the biaxial material touch one another. Accordingly, the variance in resistance from mat to mat is higher, and a calibration might be needed in order to know how much heat the heating strip will generate for a given voltage applied across the heating strip.

An advantage of using yarn/tow arranged in an undulating fashion, such as a sinusoidal fashion, is that the heating strip is less stiff. Thus, such a heating strip can be used without adding excessive stiffness to the blade.

In some embodiments, a length of each heating strip is at most 80% of a length of the blade from the root end to the tip end, such as at most 50% of the length of the blade, such as at most 33% of the length of the blade, such as at most 25% of the length of the blade. This may depend on the shape of the blade, but it has been found by the inventors that it is not necessarily required that heating strips extend along the entire length of the blade. In some embodiments, at least one heating strip, such as all heating strips, of the first plurality of heating strips nevertheless extends along substantially the entire length of the blade.

In some embodiments, the heating strips extend from the tip end to a position corresponding to the length of each heating strip. This addresses that the cooling effect of the airflow is higher at the tip end due to the higher air speeds. It is noted that heating strips with a length that is less than the length of the blade will not extend all the way to the root end.

In some embodiments, the heating generated by at least one heating strip of the first plurality of heating strips can be controlled independently of the heating generated by another heating strip of the first plurality of heating strips. In some embodiments, the heating is individually controllable for all heating strips. This allows for providing more localized heating, in particular to areas where ice patches have formed. In some embodiments, the heating in one of the heating strips is controlled based on a measurement of a physical property in the vicinity of the strip. For instance, in some embodiments a vision system, such as a camera, is used to monitor the blade surface. If an ice patch is identified in a particular part of the blade, heating strip(s) below the ice patch can be activated to remove the ice patch. If an ice patch is located above two heating strips out of, say, ten heating strips, then only those two heating strips need to be activated. This saves power and reduces the undesired expansion and contraction that occurs in the blade when the temperature is cycled.

In some embodiments, a total extent of the first plurality of heating strips in a chordwise direction at a first position along the longitudinal axis of the blade is at least 30% of a chord length at the first position, such as at least 50% of the chord length at the first position, such as at least 80% of the chord length at the first position. That is, when the blade is seen from the top in a direction normal to the chord, the ratio between heating strip regions and regions without heating strips is least 30%, such as at least 50%, such as at least 80% at said first position. This ratio typically varies somewhat in the spanwise direction due to the gradual change in the chord length along the longitudinal axis of the blade. Also, the leading-edge heating element already covers part of the chord and thus affects the required ratio. Preferably, the ratio for a given blade is adapted to ensure that in substantially all foreseeable scenarios, the heating strips are able to deice the blade surface (in the region that has heating strips). If the heating strips are spaced too far apart, it may not be possible to deice certain regions between the heating strips. At the same time, a blade may have regions with a shape that essentially does not allow ice to attach to a degree where deicing is required. In such a case, the ratio can be lower.

In some embodiments, the first end of each heating strip of the first plurality of heating strips abuts a respective first metallic mesh and the second end of each heating strip abuts a respective second metallic mesh, whereby the respective first metallic mesh and the respective second metallic mesh are electrically connected to one another via the heating strip, wherein the first metallic mesh and the second metallic mesh are connected to the power source to allow heating to be generated in the heating strip. The mesh can be made for instance of copper or copper alloy or aluminium or aluminium alloy or other metal or metal alloy.

To allow individual control of the power supplied to the different heating strips, a respective first and second metallic mesh is provided for each of the heating strips. In other embodiments, two or more heating strips share the same first metallic mesh (at the first end of the heating strips) or second metallic mesh (at the second end of the heating strips). The power can be individually controlled by connecting or disconnecting the heating strip to the power source via switching means at the opposite end of the heating strips. For instance, the first ends of the heating strips may share the same first metallic mesh. In case switching means are provided for each heating strip to allow the second end of each heating strip to be connected to or disconnected from the power source, heating can then be generated in a specific heating strip by switching on its respective switching means. Heating strips that share the same metallic mesh at the first end or the second end are essentially coupled in parallel. In some embodiments, all heating strips in the first plurality of heating strips are electrically coupled to one another by a common metallic mesh at the first end or at the second end. In case the ends of the heating strips terminate at different positions either at the first end or at the second end (or both), it may be necessary to provide a larger metallic mesh or a tailored metallic mesh, the latter embodiment saving weight. Alternatively, if separate metallic meshes are provided for the different heating strips, other types of conductors, such as power cords, may instead be used to electrically connect the separate metallic meshes, whereby the separate meshes are coupled in parallel.

Above, the first and second metallic meshes are essentially contacts for coupling the heating strips electrically to the power source to allow a voltage to be applied across the heating strips. Contacts can be provided in other ways, i.e. not as metallic meshes.

In some embodiments, metallic mesh, such as copper mesh, is arranged between the heating strips and the outer surface of the first shell portion. The metallic mesh reduces the risk of flashover and the risk that lightning attaches to a heating strip rather than to a dedicated lightning receptor in the blade. The heating strips are electrically separated from this metallic mesh by an insulating layer, such as a polyethylene terephthalate (PET) film. In some embodiments, the insulating layer is sandwiched between fibre layers, such as a glass fibre layers.

According to the invention, the first plurality of heating strips comprises a first heating strip and a second heating strip, wherein the first heating strip is closer to the leading edge than the second heating strip and wherein the first heating strip is longer than the second heating strip. The chord length changes along a typical blade, and thus it may be required to terminate a strip earlier than strips closer to the leading edge. This has proven to still allow complete deicing in the region where a strip is terminated even though it leaves behind a region that is a little farther from a heating strip. Another option is to taper the heating strips where needed, but this requires additional steps (and thus time) and, as mentioned, has turned out not to be necessary.

Alternatively, a length of each of the first plurality of heating strips starting from the leading edge towards the trailing edge is at most as long or shorter than a preceding heating strip of the first plurality of heating strips. That is, the length of the heating strips is at most equal to one another or becomes shorter in the direction from the leading edge to the trailing edge. Due to the motion of the blade and the local airflow speed, this configuration can still deice the blade (in the region that has heating strips). The configuration may need slight adjustments depending on the shape of the particular blade.

In some embodiments, the number of strips in the first plurality of strips is in the range 2-50, such as in the range 5-50, such as in the range 10-50, such as in the range 10-30, such as in the range 10-20. This number of heating strips is suitable for most blade curvatures. The width of the heating strips, which needs not be the same for all heating strips, combined with the number of heating strips preferably results in an embodiment as described above where a ratio between heating strip regions and regions without heating strips is least 30%, such as at least 50%, such as at least 80% at said first position.

In some embodiments, both the suction side shell portion and the pressure side shell portion comprise a plurality of heating strips. In other words, the second blade portion of the blade, that is, the shell portion opposite the first shell portion (which is either the suction side shell portion or the pressure side shell portion) comprises:
- a second plurality of heating strips, each heating strip of the second plurality of heating strips extending in a substantially spanwise direction of the wind turbine blade, the second plurality of heating strips forming part of the second shell portion of the wind turbine blade, the second plurality of heating strips being spaced apart from one another and from the leading-edge heating strip in a chordwise direction, each heating strip having a first end and a second end, the first end being closer to the tip end than the second end, each heating strip comprising carbon-fibre yarn and/or tow material, each heating strip of the second plurality of heating strips being connected to a power source configured to provide electrical power to each of the second plurality of heating strips in order to generate heating in said each strip, said heating being generated by the carbon-fibre yarn and/or tow material in the respective heating strip.

The heating strips on one side can and typically will have different parameters compared to the other side because the two sides do not have the same shape. That is, the number of heating strips and/or the ratio between heating strip regions and regions without heating strips and/or the widths of the heating strips may be different on one side compared to the other side.

A second aspect provides a method of manufacturing a wind turbine blade in accordance with the first aspect of the invention. The method comprises:
- laying up, in a first mould, material for forming the first shell portion, including laying up fibre material, the leading-edge heating element, and the first plurality of heating strips,
- embedding the laid-up material in a resin, such as by resin infusion,
- connecting the first end and the second end of each heating strip to the power source.

In some embodiments, switches are provided to allow the heating in one of the heating strips to be adjusted independently of the other heating strips.

The considerations described in relation to the first aspect apply equally to the second aspect.

A third aspect provides a method for deicing a wind turbine blade in accordance with the first aspect of the invention. The method comprises:
- providing electrical power to each of the heating strips in the first plurality of heating strips to generate heat in the heating strips.

In some embodiments, the power provided to a first heating strip of the first plurality of heating strips is controllable independently of the power provided to a second heating strip of the first plurality of heating strips. This allows heat to be generated only where necessary, saving power and reducing fatigue from expansion and contraction in the blade due to temperature changes caused by the heating.

In some embodiments, the heating in each heating strip is controllable independently of the heating in all the other heating strips in the first plurality of heating strips.

In some embodiments, the heating in each of the heating strips is controlled based on an image of the blade surface obtained from a vision system. The heating is controlled in such a way that heating is provided to a particular heating strip if it is determined, based on the image from the vision system, that deicing is required in the vicinity of said particular heating strip. This results in a particularly efficient deicing process, as heating is provided only where needed and when needed. When the amount of ice is reduced to below a threshold or entirely eliminated in the vicinity of a particular heating strip as detected by the vision system, the heating in the particular heating strip can be reduced or switched off entirely.

A fourth aspect provides a heating strip comprising a plurality of carbon fibre yarns and/or tows extending from a first end to a second end of the heating strip. Such a heating strip can be used in the aspects described above. An advantage of having yarns and/or tows that extend all the way from the first end to the second end of the heating strip is that the electrical properties of the heating strip are more consistent from one manufactured heating strip to another compared for instance to heating strips that employ biaxial fibre material instead.

In some embodiments, the carbon fibre yarns and/or tows extend from the first end to the second end of the heating strip in an undulating fashion, such as in a substantially sinusoidal fashion. This results in a more malleable and less stiff heating strip.

In some embodiments, contacts are provided at either end of the heating strip, for instance in the form of abutting metallic meshes, such as copper meshes. This solution provides a low-resistance connection between the metallic meshes and the heating strip. An area of the metallic mesh is advantageously in the range 2 cm² to 500 cm², such as in the range 5 cm² to 250 cm², such as in the range 5 cm² to 100 cm², such as in the range 10 cm² to 100 cm², such as in the range 25 cm² to 75 cm². This may depend on a width of the heating strip. A 100-mm wide heating strip may for instance be abutted by a metallic mesh having dimensions 10 cm x 10 cm. The width of the metallic mesh is advantageously the same as the width of the heating strip but needs not be. These numbers result in a good connection between the metallic mesh and the heating strip while keeping down weight as well as the cost of the metallic mesh, such as copper mesh.

In some embodiments, the metallic mesh is substantially as wide as the heating strip and a length of the metallic mesh is in the range 0.5 cm to 100 cm, such as in the range 1 cm to 50 cm, such as in the range 5 cm to 50 cm. These numbers result in a good connection between the metallic mesh and the heating strip while keeping down weight as well as the cost of the metallic mesh, such as copper mesh.

### Brief description of the drawings

The invention is explained in detail below with reference to the embodiments shown in the drawings.
Fig. 1 is a schematic view illustrating an exemplary wind turbine.
Fig. 2 is a schematic view illustrating an exemplary wind turbine blade.
Fig. 3 illustrates a wind turbine blade with ice patches in a perspective view.
Figs. 4a-4f illustrate a wind turbine blade with ice patches in a top view and illustrate a wind turbine blade in accordance with the invention and a deicing process in accordance with the invention.
Figs. 5-7 illustrate schematically different schedules for generating heat in the heating strips.
Fig. 8 illustrates a cross-section of a wind turbine blade in accordance with the invention.
Fig. 9a illustrates a detail of the cross-section A-A indicated in Fig. 4a, Fig. 8, and Fig. 9c.
Fig. 9b illustrates a detail of the cross-section B-B indicated in Fig. 9c.
Fig. 9c illustrates a heating strip with an abutting metallic mesh at each end of the heating strip.
Figs. 10-11 illustrate different types of heating strips.

### Detailed description of selected embodiments

Embodiments of the invention will be described in more detail in the following with reference to the accompanying drawings. Similar reference numerals generally refer to similar elements throughout. The drawings show selected ways of implementing the aspects of the present invention and are not to be construed as limiting. Unless otherwise indicated, the drawings are not necessarily drawn to scale. The relative size of the different elements and their shape may have been chosen to make different elements or details clearly discernible.

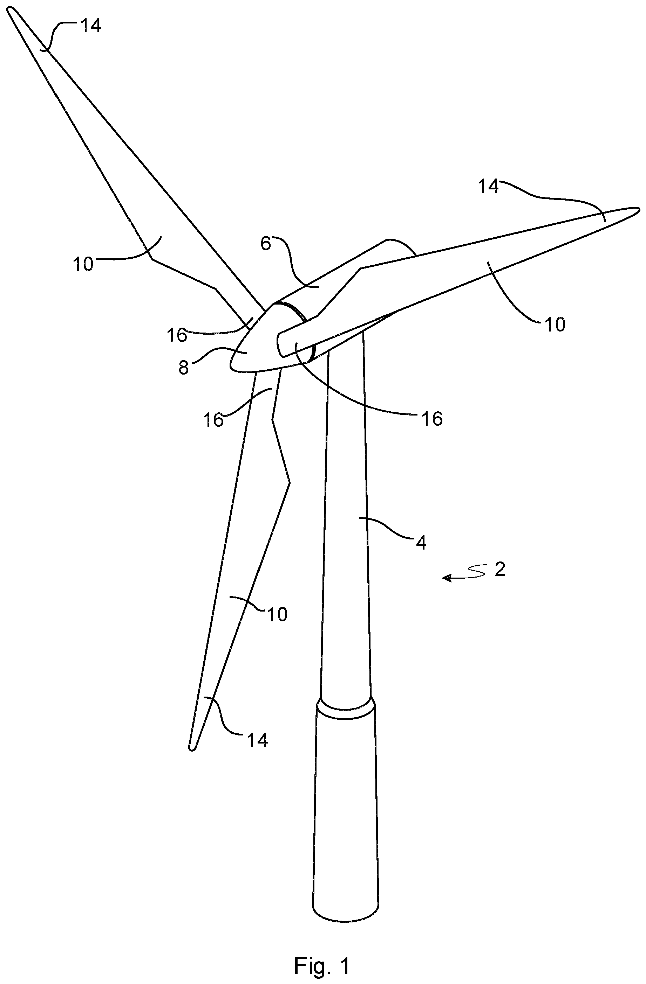

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each blade having a blade root 16 nearest the hub and a blade tip 14 with a tip end 15 furthest from the hub 8. The invention is not limited to wind turbines of this type.

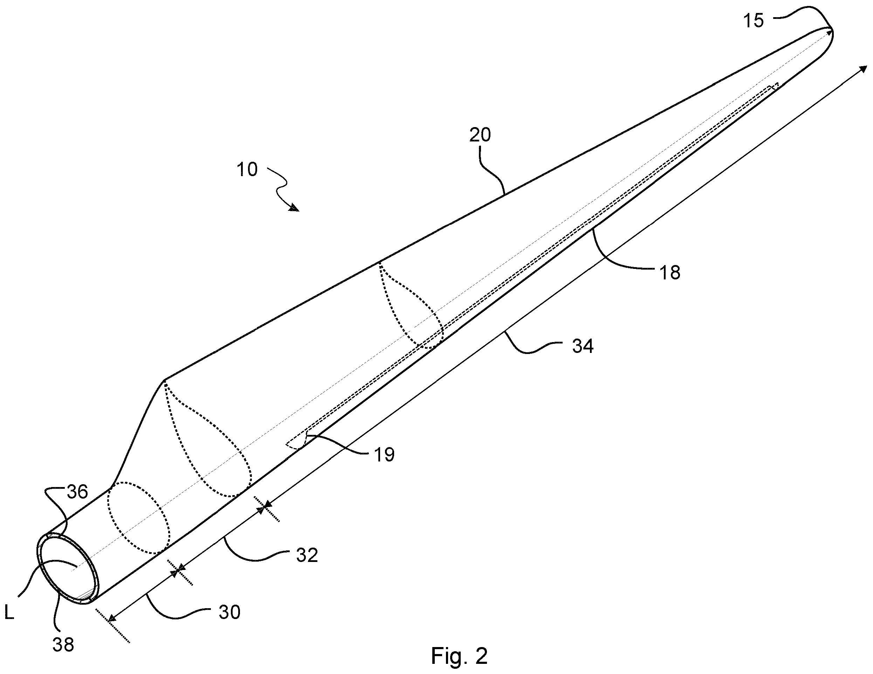

Fig. 2 shows a schematic view of an exemplary wind turbine blade 10. The wind turbine blade 10 has the shape of a conventional wind turbine blade with a root end 17 and a tip end 15 and comprises a root region 30 closest to the hub, a profiled or airfoil region 34, and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) preferably has an ideal shape with respect to generating hub rotation, whereas the root region 30 due to structural considerations has a substantially circular or elliptical cross-section, which for instance makes it easier and safer to mount the blade 10 to the hub. The diameter of the root region 30 may be constant along the entire root region 30. The transition region 32 present in the wind turbine blade 10 in this example has a transitional profile gradually changing from the circular shape of the root region 30 to the airfoil profile of the airfoil region 34. The chord length of the transition region 32 typically increases in an outward direction from the hub. The airfoil region 34 has an airfoil profile with a chord extending between the leading edge 18 and the trailing edge 20 of the blade 10.

Different sections of the blade normally do not have a common plane, since the blade may be twisted and/or curved (i.e. pre-bent) along a direction from the root region to the tip, this being most often the case, for instance to more or less compensate for the local velocity of the blade being dependent on the distance from the hub.

The wind turbine blade 10 comprises a blade shell which may for instance comprise two blade shell parts, a first blade shell part 24 and a second blade shell part 26, for instance made at least partly of fibre-reinforced polymer. The first blade shell part 24 may for instance be part of a pressure side or upwind blade part. The second blade shell part 26 may for instance be part of a suction side or downwind blade part. The first blade shell part 24 and the second blade shell part 26 are typically joined together, such as glued together, along bond lines or glue joints 28 extending along the trailing edge 20 and the leading edge 18 of the blade 10. Typically, the root ends of the blade shell parts 24, 26 have a semi-circular or semi-oval outer cross-sectional shape that, when the first and second shell parts are joined, forms the root region, such as a circular or oval root region.

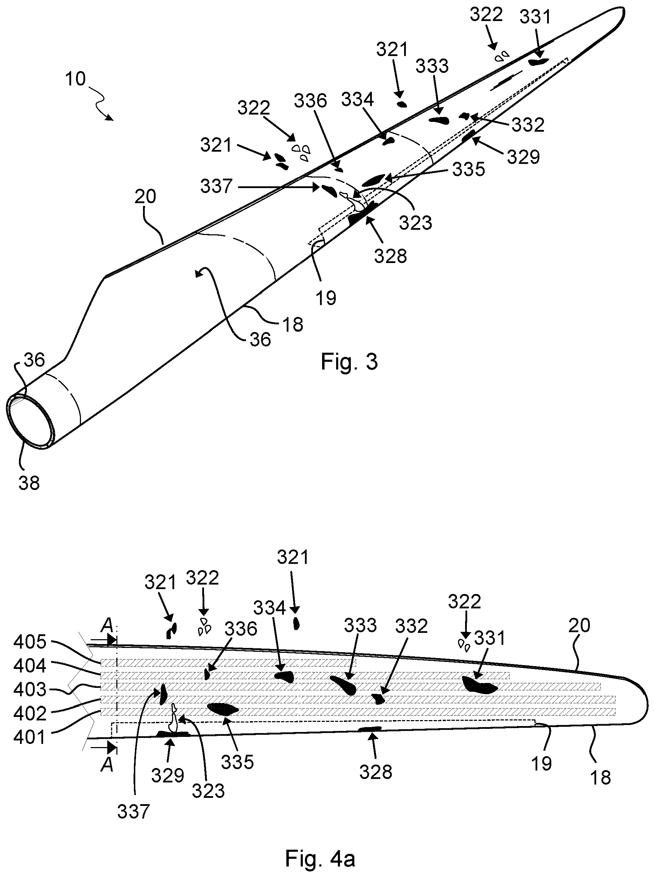

Fig. 3 illustrates a wind turbine blade 10 with precipitation in various states on the blade 10. The blade 10 has a deicing element 19 extending along a portion of the blade 19 for deicing a corresponding portion of the leading edge 18 of the blade 10. Ice patches 328-329 have formed on the leading edge 18 of the blade. On the visible side of the blade, in this case the pressure side 36, ice patches 331-337 have also formed. Such ice patches affect the aerodynamic properties of the blade, which reduces the efficiency of the blade and may also cause noise. Fig. 3 also illustrates melted ice 323 resulting when the leading-edge heating element 19 is active and melts ice such as ice patch 328. Ice chunks 321 behind the leading edge illustrate ice that has been dislodged from the blade, for instance as a result of heating on the leading edge or from merely breaking off due to the airflow across the blade 10. Similarly, Fig. 3 illustrates dislodged ice in the form of liquid water 322.

It has been found to be a problem that melted water, such as melted water 323 illustrated in Fig. 3, refreezes on the blade downstream from the leading edge 18 of the blade. For instance, ice patch 337 may be the result of such melted water having refrozen onto the blade. One or more of ice patches 331-336 may have formed by the same mechanism (or by another mechanism). For instance, ice patches 332 may have formed during melting of ice patch 329 on the leading edge 18 of the blade. While the ice patch 329 is reduced in size due to heating by the leading-edge heating element 19, the water has partly refrozen on the blade in the form of ice patches 332-333. Similarly, ice patches 331 and 334-336 could be the result of melted ice from deicing of the leading edge 18 freezing onto the blade 10 downstream from ice patch 329.

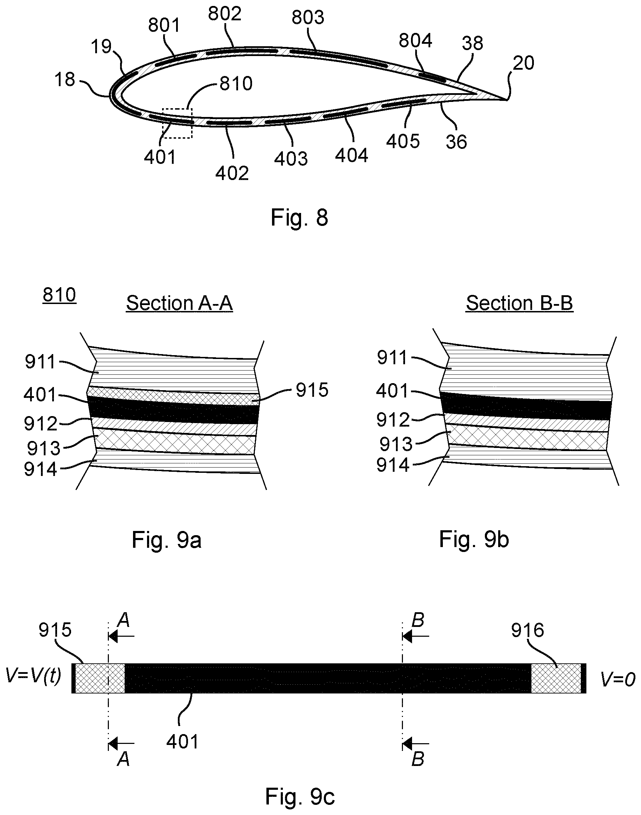

Fig. 4a illustrates the blade 10 seen in a top view towards the pressure side 36 of the blade 10. The ice patches 328-329, 331-337, dislodged ice 321 and melted ice 322-323 shown in Fig. 3 are illustrated in the top view in Fig. 4a. Further, Fig. 4a illustrates a plurality of heating strips 401-405 arranged in the pressure side shell portion 36 in accordance with an embodiment of the invention. The heating strips comprise carbon fibre yarn and/or tow and are connected by conductors to a power source (conductors and power source not shown). Each of the heating strips in this example is connected to the power source at either end of the heating strips (that is, at the left end and at the right end of the heating strips in the figure). By applying a voltage across each of the strips 401-405, heat is generated that heats up the surface of the blade 10, which in turn melts ice on the surface of the blade 10. Note that the heating strips are not visible in practice, as they are positioned below the outer surface of the wind turbine blade so as not to be exposed to the environment. In the present example, the heating strips are embedded in the wind turbine blade, as illustrated in Figs. 8 and 9a-9c. By embedding the heating strips, heating is provided closer to the outer surface, which is where ice forms. If the heating strips are on the inner surface of the shell portion (exposed to the inside of the wind turbine blade), more heating is required in order to increase the temperature at the outer surface because of the higher distance to the outer surface of the shell portion.

In this example, the length of the longest of the heating strips, i.e. heating strips 401 and 402, is approximately 50% of the length of the blade from the root end to the tip end (not discernible from the drawings). The total extent of the heating strips at the position indicated by the section A-A is approximately 52%. This can also be seen as a degree of coverage. Specifically, the heating strips 401-405 cover 52% of the chord length at the position A-A.

The heating strips 401-405 extend substantially parallelly, and they are spaced apart from one another in the chordwise direction. The different ice patches 331-337 are located above different heating strips, and in some cases the ice patches also extend to surface portions between strips, for instance ice patches 331, 333, and 335.

In this example, not all heating strips terminate at the same longitudinal position. This is due to the narrowing of the blade in the direction towards the tip of the blade. Accordingly, in this example the back-most heating strip 405 is terminated farther from the tip than the other heating strips. The two heating strips 401 and 402 extend the farthest towards the tip (and in this example have equal lengths).

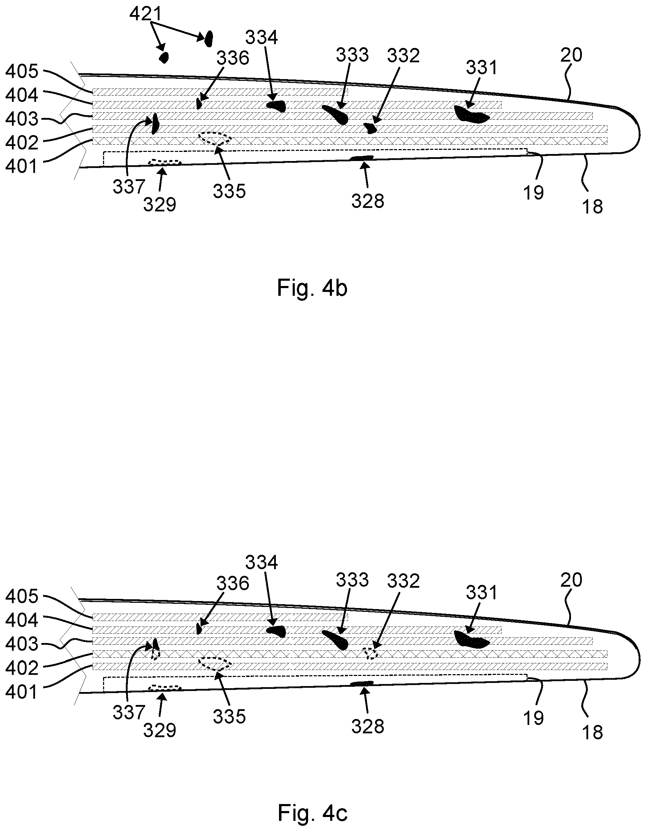

Figs. 4b-4f illustrate a deicing process in accordance with an embodiment of the invention. First, as shown in Fig. 4b, a heating strip 401 closest to the leading edge 18 of the blade 10 is heated by applying a voltage across the heating strip, i.e. between the ends of the heating strip 401. The generation of heat is schematically illustrated with criss-cross hatching of the heating strip 401.

Due to the relatively low conductivity of carbon fibre, the carbon fibre yarn and/or tow in the heating strip 401 heats up, causing the surface temperature of the pressure side portion to increase in the vicinity of the heating strip 401. In this example, this melts the ice patch 335, which is removed as a result. It may also be the case that the heating simply dislodges the ice patch 335. This depends on the shape and size of the ice patch 335.

In the present example, the ice patch 329 on the leading edge has been removed from the leading edge 18 by heating the leading edge 18 using the leading-edge heating element 19.

The power provided to the strip 401 can be controlled separately from the other heating strips 402-405. In some embodiments, all heating strips are connected in parallel to the power source and therefore provide heating simultaneously, or they are all turned off. In the present example, all strips are individually controllable, as described further with reference to Figs. 4c-4f below.

For illustration purposes, Fig. 4b further illustrates ice chunks 421 that have been dislodged, for instance due to the heating of the ice patch 329 by the leading-edge heating element 19 or the heating of the ice patch 335 by heating strip 401.

As a result of the heating in heating strip 401, the blade 10 now has less ice on the surface. Thus, noise and/or vibrations caused by the ice patch 335 is eliminated. The heating time of heating stripe 401 may be selected in dependence on parameters such as the ambient temperature and the amount of ice on the blade 10.

In a next step, the heating strip 402 is activated and the heating strip 401 is deactivated. This is shown in Fig. 4c. The heating in heating strip 402 causes the ice patch 332 and part of ice patch 337 to melt. Part of ice patch 337 is sufficiently far from heating strip 402 to be melted, as illustrated in Fig. 4c. As a result of the heating by heating strip 401 and the heating by heating strip 402, the blade 10 has even less ice on the pressure side surface. As a result, the noise and vibrations that could otherwise arise due to ice patches 332, 335, and the now-melted part of ice patch 337 are eliminated. Elimination of vibrations also leads to a reduced mechanical wear of the components, and the efficiency of the blade is increased.

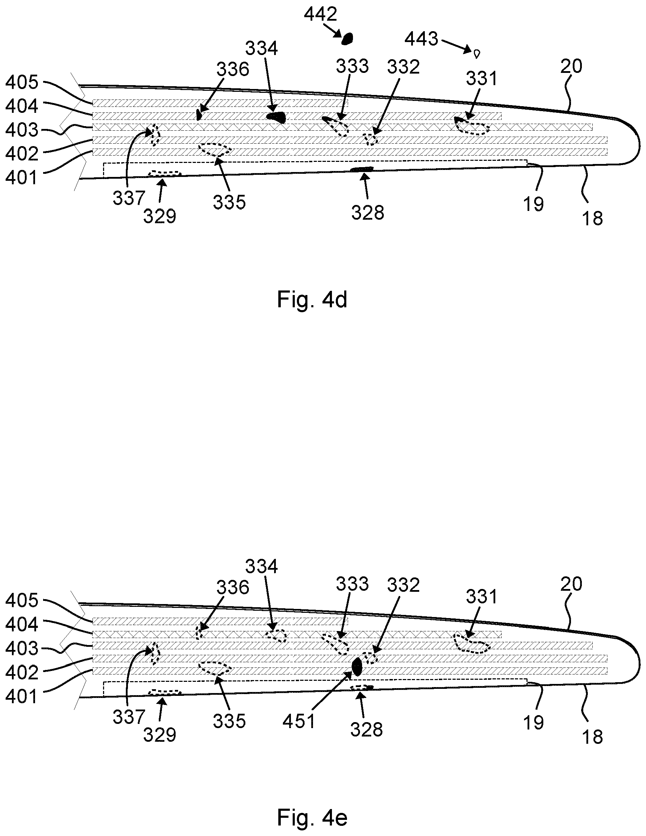

As a next step in the present embodiment, heating strip 403 is activated and heating strip 402 is deactivated, as shown in Fig. 4d. This causes the rest of ice patch 337 to melt. Additionally, part of ice patch 331 and part of ice patch 333 melt. The non-melted parts are too far from the heating strip 403 for the heat generated from heating strip 403 to melt the entire ice patches 331 and 333.

Nevertheless, a further part of the blade 10 is now free of ice that would otherwise contribute to mechanical wear, generation of noise, and loss of efficiency.

Next, heating strip 404 is activated and heating strip 403 is deactivated, as illustrated in Fig. 4e. Ice patches 336 and 334 and the rest of ice patches 331 and 333, partly melted in the previous step, are now removed from the blade 10. Also, a further part of ice patch 328 on the leading edge 18 of the blade 10 has been removed due to heating of the leading edge by the leading-edge heating element 19. However, in accordance with the problem addressed by the invention, a new ice patch 451 has been formed by water from the partly melted ice patch 328. Thus, even though all other ice patches have been removed through the successive heating of the plurality of heating strips 401-405, a new ice patch 451 is now present on the surface of the blade 10.

Through the deicing cycle described above, the blade 10 has been partly deiced.

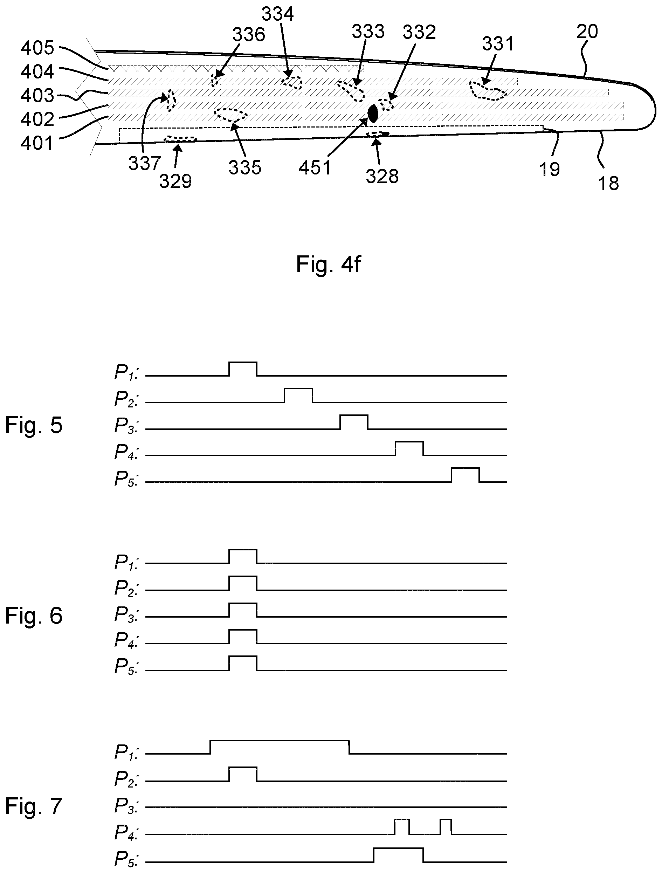

As a final step, the last heating strip 405 is activated and the previous heating strip 404 is deactivated, as illustrated in Fig. 4f. In this example, there is no ice in the heating area of the heating strip 405, and thus the heating in heating strip 405 does not dislodge any ice.

The newly formed ice patch 451 and any other ice patches formed may be eliminated by repeating the steps above. Depending on the ambient temperature, the humidity, and the level of precipitation, the cycle can be repeated with a higher frequency.

Fig. 5 illustrates schematically and in arbitrary units the heating power provided by the five heating stripes 401-405 as a function of time corresponding to the example described in relation to Figs. 4a-4f above. An amount of power is provided to heating strip 401 for an amount of time, corresponding to Fig. 4b described above. Then, the power is switched off in heating strip 401 and power is provided to heating strip 402, as illustrated by the power graph *P₂,* then in heating strip 403 as illustrated by the power graph *P₃,* then in heating strip 404 as illustrated by the power graph *P₄,* and finally in heating strip 405 as illustrated by the power graph *P₅.*

An advantage of this scheme is that ice that has melted, for instance when heating strip 401 was active but has refrozen onto the blade further back, such as near heating strip 404, will be dislodged in a subsequent heating step, in this case when heating strip 404 is activated.

Fig. 6 illustrates another schedule for providing power in the heating strips 401-405. In this example, power is provided to all strips at the same time. An advantage of this scheme is that the surface of the blade 10 is heated across the entire chord, and thus ice dislodged for instance above heating strip 401 cannot reattach to the blade since the blade is also heated downstream from the leading edge 18.

Fig. 7 illustrates a more advanced power schedule. In this example, the power *Pᵢ* in the different heating strips 401-405 depends on a determination of the need for deicing. In some embodiments, the deicing is determined by a visual inspection, such as by an automated visual inspection using a vision system such as a camera, of the shell portion 36. In the example in Fig. 7, it is determined by the visual inspection that a significant amount of ice has formed above the heating strip 401. Accordingly, heating is provided for an amount of time. In this example, the heating is applied for a relatively long time because it has been determined that a substantial amount of ice has formed above the heating strip 401 and remains attached despite the heating.

The heating time may proceed while the blade 10 is monitored, and the heating may be stopped when it is determined from the monitoring that the ice above the heating strip 401 has been eliminated. Similarly, the heating in heating strip 402 illustrated in Fig. 7 proceeds for an amount of time reflecting that it has been determined that an amount of ice is located above the heating strip 402. The heating in heating strip 402 ends when the ice above the heating strip 402 is determined to have been removed.

Heating strip 403 is not powered on at all for the illustrated period of time because no ice has been determined to be located above heating strip 403 by the vision system.

Heating strip 404 is heated twice in quick succession because two ice pieces have formed one after the other, identified by the vision system. Both ice pieces dislodged quickly, and thus the heating in heating strip 404 was terminated quickly.

Lastly, as shown in Fig. 7, heating strip 405 is heating overlappingly with the heating in heating strip 404. The ice being removed by the heating in heating strips 404 and 405 might for instance be refrozen water from the deicing performed by heating strips 401 and 402 as described above or from deicing of the leading edge by the leading-edge heating element 19.

An advantage of the scheme illustrated in Fig. 7 is that power is provided only where needed and when needed. If no ice collects on the blade 10, there is no reason to expend energy on heating the heating strips 401-405. Similarly, if ice collects only near heating strip 403, there is no reason to expend energy heating up heating strips 401-402 and 404-405. The selective heating saves power and reduces fatigue resulting from expansion and contraction caused by the temperature variations arising from the heating and subsequent cooling.

As another example, starting from Fig. 4a, a visual inspection reveals that ice patches have formed above heating strips 401-404, but not above heating strip 405. Accordingly, heating will be switched on in heating strips 401-404. This eliminates the ice patches 331-337. When the ice has been removed above a heating strip, say heating strip 402, the heating is switched off. The ice patch 331 is more substantial and may take longer to dislodge or melt. Accordingly, the heating strip 403 above which the ice patch 331 is located must be kept on for longer. Thus, the heating in heating strip 403 ends up being switched off after heating in heating strip 402 has been switched off. On the other hand, the vision system determines that no ice is located above heating strip 405 and thus heating is not provided in heating strip 405, contrary to what is shown in Fig. 4f in which heating is provided independent of whether there is ice above a heating strip or not. This saves power and reduces fatigue.

The ice patch 451 shown in Fig. 4e and described in relation to Fig. 4e might not form with a power schedule based on visual inspection, for instance because the vision system would reveal the ice patch 451 earlier and heating would be provided in heating strips 401 and 402 in response, eliminating the ice patch.

Generally, the heating in the heating strips may run in a schedule that may depend on the ambient temperature, or it might run based on a vision system or other system that is capable of detecting whether ice is present above a heating strip. It is also possible to simply power all heating strips simultaneously and switch them off simultaneously.

In some embodiments, the system does not run continuously. The higher the ambient temperature, the less ice will form on the blade. Accordingly, the build-up of ice downstream on the blade will progress more slowly, and there is less need for deicing. After an amount of time that in some embodiments depends on the ambient temperature, a heating schedule is allowed to run that will remove ice that has built up. At lower temperatures, ice will build up at a higher rate. Thus, a deicing process is performed with higher frequency than at higher temperatures.

When using a vision system for detecting ice, a deicing process may be postponed until the vision system determines that an ice patch has increased to a size above an acceptable size. That is, deicing is not performed even though there is an ice patch on the shell portion. Once an ice patch grows to a threshold size, heating will be provided in corresponding heating strips to remove the ice patch. This saves power compared to continuously removing even small ice patches. Taking the example from Fig. 4a, the vision-based system would activate when the ice patch 331 had reached a threshold size and heating would dislodge it. Similarly, the relatively large ice patches 333 and 335 would be removed before exceeding the threshold size by providing heating in heating strips 401, 403, and 404 (ice patch 333 spans both heating strip 403 and 404). A further advantage of this schedule is that the smaller ice patches 332, 334, 336 and part of ice patch 337 would be removed as well and thus would not grow larger.

Fig. 8 illustrates the cross-section A-A indicated on the blade 10 in Fig. 4a. Fig. 8 shows the five heating strips 401-405 arranged as part of the pressure side shell portion 36, as also shown in Figs. 4a-4f. Fig. 8 also illustrates the leading-edge heating element 19 that provides deicing of the leading edge 18 of the blade 10. When electrical power is supplied to the heating strips 401-405, the generated heat is conducted to the outer surface of the pressure side shell portion, causing ice located on the outer surface to melt or dislodge from the outer surface as described above. In accordance with the invention, the heating strips 401-405 are spaced apart. Preferably, the spacing is such that the heat transferred from the heating strips 401-405 to areas that are not immediately above one of the heating strips 401-405 is sufficient to melt ice or at least cause it to dislodge from the surface of the blade 10.

Fig. 8 illustrates a second plurality of heating strips consisting of four heating strips 801-804 arranged as part of the suction side shell portion 38 for deicing the surface of the suction side shell portion 38. They work similarly to the heating strips 401-405 that are part of the pressure side shell portion 36 as described above. Like the heating strips 401-405 in the pressure side shell portion 36, the heating provided by each of the heating strips 801-804 may be individually controllable in order to achieve the advantages described above in relation to heating strips 401-405, including avoiding unnecessary heating which causes a loss of wind turbine efficiency, and reducing the expansion and contraction caused by the temperature fluctuations that arise from the heating and subsequent cooling of the shell portion 38.

Fig. 8 also illustrates that heating strips may have different widths and be spaced apart by different amounts. Fig. 8 also indicates a detail 810 described in more detail in Figs. 9a-9b.

Fig. 9a schematically illustrates the part 810, indicated in Fig. 8, in more detail. The cross-section A-A corresponding to Fig. 9a is indicated in Fig. 4a and Fig. 9c, the latter figure showing only the carbon fibre material and metallic meshes for coupling the carbon fibre material to the power source. Part 810 comprises an inner skin 911 that forms part of the inner surface of the shell portion 36 and an outer skin 914 that forms part of the outer surface of the shell portion 36. The shell portion further comprises a metallic mesh 913, such as a copper mesh, arranged between the heating strip 401 and the outer surface of the shell portion 36. This metallic mesh 913 reduces the risk that lightning current is carried in the heating strip 401, which would be detrimental to the heating strip and could severely damage the blade 10. An electrically insulating layer 912, such as a PET film, electrically separates the heating strip 401 from the copper mesh 913. In some embodiments, the insulating films may be sandwiched between fibre layers, such as a glass fibre layers. Part 810 further comprises a metallic mesh 915, such as a copper mesh, that overlaps the heating strip 401. The heating strip 401 and the metallic mesh 915 are therefore electrically connected. Metallic mesh 915 is used as a contact for connecting the first end of the heating strip 401 to the power source. The heating strip 401 with the metallic mesh 915 is illustrated in Fig. 9c. To illustrate that the metallic mesh 915 abuts the heating strip 401 in a direction from the inner surface to the outer surface of the shell portion, the metallic mesh 915 is shown as not extending all the way to the first end of the heating strip 401. However, in some embodiments, the metallic mesh starts at the very end of the heating strip. Fig. 9c also shows a second metallic mesh 916 arranged similarly at the second end of the heating strip 401. By applying a voltage across the metallic meshes 915 and 916, heating is generated in the heating strip. Fig. 9b shows a cross-section corresponding to the indication B-B in Fig. 9c. In this region, there is no metallic mesh abutting the carbon fibre material. Thereby, the metallic meshes 915 and 916 are electrically separated by the carbon fibre material in the heating strip 401, allowing heating in the heating strip 401. Fig. 9b further shows inner skin 911, insulating film 912, metallic mesh 913, and outer skin 914 (whereas Fig. 9c for illustration purposes only show the carbon fibre material 401 and the metallic meshes 915 and 916).

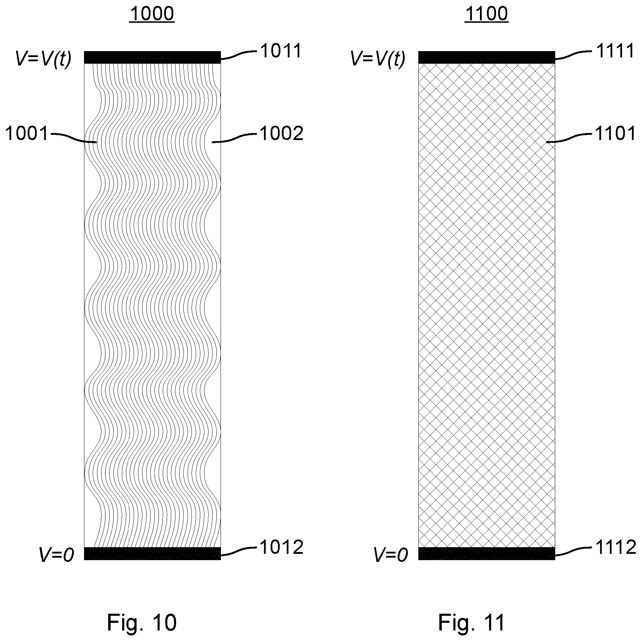

Fig. 10 illustrates an exemplary heating strip 1000 for use in the present invention for deicing a blade shell portion of a blade, in particular downstream in the chordwise direction from the leading edge of the blade. For instance, the heating strip 1000 can be used for any of heating strips 401-405. In this example, the heating strip 1000 comprises glass fibre material, such as a glass fibre mat 1002, with a number of carbon fibre yarns and/or tows 1001 sown onto it. The carbon fibre yarns and/or tows extend between opposite ends of the heating strip 1000. In this example, contacts 1011 and 1012 are provided at opposite ends of the heating strip 1000. By applying a voltage *V(t)* across the contacts 1011 and 1012, the carbon material creates heat for deicing the surface of the blade 10 as described above in relation to Figs. 4a-4f. An advantage of the heating strip 1000, which has carbon fibre yarn/tow arranged in an undulating fashion, such as a sinusoidal fashion, is that the heating strip 1000 is less stiff than for instance a unidirectional fibre mat. Thus, the heating mat 1000 can be used without adding excessive stiffness to the blade 10.

Fig. 11 illustrates another exemplary heating strip 1100. The heating strip 110 comprises biaxial fibre material 1101. Similarly to the heating strip 1000, contacts 1111 and 1112 are provided to allow a voltage *V(t)* to be applied, whereby the carbon material creates heat for deicing the surface of the blade 10 as described above.

Another option is to use a unidirectional fibre mat as a heating strip, but unidirectional mats have the disadvantage that they are stiff, and their use as heating strips in the context of the present invention is therefore less preferred.

### List of references

- 2: wind turbine
- 4: tower
- 6: nacelle
- 8: hub
- 10: blade
- 14: blade tip
- 15: tip end
- 16: blade root
- 17: root end
- 18: leading edge
- 19: leading-edge heating element
- 20: trailing edge
- 24: first blade shell portion (pressure side)
- 26: second blade shell portion (suction side)
- 28: bond lines/glue joints
- 30: root region
- 32: transition region
- 34: airfoil region
- 36: pressure side shell portion of blade
- 38: suction side shell portion of blade
- 40: blade shoulder
- 321: dislodged ice chunks
- 322: dislodged water
- 323: melted ice
- 328-329: ice patches
- 331-337: ice patches
- 401-405: heating strips in pressure side shell portion
- 421: dislodged ice chunks
- 801-804: heating strips in suction side shell portion
- 810: shell portion detail
- 911: inner skin of shell portion
- 912: electrically insulating film
- 913: metallic mesh
- 914: outer skin of shell portion
- 915: heating strip contact
- 916: heating strip contact
- 1000: heating strip
- 1001: carbon fibre yarn/tow
- 1002: glass fibre mat
- 1011: heating strip contact
- 1012: heating strip contact
- 1100: heating strip
- 1101: biaxial fibre material
- 1111: heating strip contact
- 1112: heating strip contact
- *L*: longitudinal axis of blade
- *Pᵢ*: power provided to create heating in heating strip *i*
- *V, V(t)*: voltage applied to create heating in heating strip

## Claims

1. A wind turbine blade (10) having a suction side shell portion (38) and a pressure side shell portion (36), each shell portion extending between a leading edge (18) of the wind turbine blade and a trailing edge (20) of the wind turbine blade, the wind turbine blade extending along a longitudinal axis (L) from a root end (30) of the wind turbine blade to a tip end (15) of the wind turbine blade, the wind turbine blade comprising:
- a leading-edge heating element (19) extending along at least a portion of the leading edge of the wind turbine blade, the leading-edge heating element being configured for deicing a corresponding portion of an exterior surface of the leading edge,
- a first plurality of heating strips (401-405, 801-804), each heating strip of the first plurality of heating strips extending in a substantially spanwise direction of the wind turbine blade, the first plurality of heating strips forming part of a first shell portion of the wind turbine blade, the first plurality of heating strips being embedded inside the first shell portion or positioned such that they are exposed to an inside of the wind turbine blade, wherein the first shell portion is the pressure side shell portion or the suction side shell portion, the first plurality of heating strips being spaced apart from one another and from the leading-edge heating strip in a chordwise direction, each heating strip having a first end and a second end, the first end being closer to the tip end than the second end, each heating strip comprising carbon-fibre yarn and/or tow material (1001, 1101), and
- a power source configured to provide electrical power to each of the first plurality of heating strips in order to generate heating in said each strip, said heating being generated by the carbon-fibre yarn and/or tow material,
wherein:
i. the first plurality of heating strips comprises a first heating strip and a second heating strip, wherein the first heating strip is closer to the leading edge than the second heating strip and wherein the first heating strip is longer than the second heating strip, or
ii. in a direction from the leading edge to the trailing edge, a length of each of the first plurality of heating strips is at most as long or shorter than a preceding heating strip of the first plurality of heating strips.

2. A wind turbine blade in accordance with claim 1, wherein one or more of the first plurality of heating strips comprise one or more carbon fibre yarns and/or tows (1001, 1101) extending from the first end to the second end of the heating strip.

3. A wind turbine blade in accordance with claim 1 or 2, wherein one or more of the carbon fibre yarns and/or tows, such as all the carbon fibre yarns and/or tows, extend from the first end to the second end of the respective heating strip in an undulating fashion, such as in a substantially sinusoidal fashion (1001).

4. A wind turbine blade in accordance with any of the preceding claims, wherein one or more of the first plurality of heating strips comprises unidirectional carbon fibre material or biaxial fibre material (1101) for generating the heating.

5. A wind turbine blade in accordance with any of the preceding claims, wherein a length of each heating strip is at most 80% of a length of the blade from the root end to the tip end.

6. A wind turbine blade in accordance with any of the preceding claims, wherein the heating generated by at least one heating strip of the first plurality of heating strips can be controlled independently of the heating generated by another heating strip of the first plurality of heating strips.

7. A wind turbine blade in accordance with any of the preceding claims, wherein a total extent of the first plurality of heating strips in a chordwise direction at a first position along the longitudinal axis of the blade is at least 50% of a chord length at the first position.

8. A wind turbine blade in accordance with any of the preceding claims, wherein the first end of each heating strip of the first plurality of heating strips abuts a respective first metallic mesh (915) and the second end of each heating strip abuts a respective second metallic mesh (916), whereby the respective first metallic mesh and the respective second metallic mesh are electrically connected to one another via the heating strip, and wherein the respective first metallic mesh and the respective second metallic mesh are connected to the power source to allow heating to be generated in the heating strip by providing electrical power to the heating strip.

9. A wind turbine blade in accordance with any of the preceding claims, further comprising metallic mesh, such as copper mesh, arranged between the heating strips and the outer surface of the first shell portion.

10. A wind turbine blade in accordance with any of the preceding claims, wherein both the suction side shell portion and the pressure side portion comprises a plurality of heating strips as described in claim 1.

11. A method of manufacturing a wind turbine blade in accordance with one of claims 1-10, comprising:
- laying up, in a first mould, material for forming the first shell portion, including laying up fibre material, the leading-edge heating element, and the first plurality of heating strips,
- embedding the laid-up material in a resin, such as by resin infusion, and
- connecting each of the heating strips to a power source to allow heating to be provided in each of the heating strips by applying a voltage across each heating strip,
wherein:
i. the first plurality of heating strips comprises a first heating strip and a second heating strip, wherein the first heating strip is closer to the leading edge of the first shell portion than the second heating strip and wherein the first heating strip is longer than the second heating strip, or
ii. in a direction from the leading edge of the first shell portion to the trailing edge of the first shell portion, a length of each of the first plurality of heating strips is at most as long or shorter than a preceding heating strip of the first plurality of heating strips.

12. A method for deicing a wind turbine blade in accordance with any of claims 1-10, the method comprising:
- providing electrical power to each of the heating strips in the first plurality of heating strips to generate heat in the heating strips.

13. A method in accordance with claim 12, wherein the heat generated in each of the heating strips is controlled based on an image of the blade surface obtained from a vision system, wherein heating is provided in a particular heating strip if it is determined, based on the image from the vision system, that deicing is required in the vicinity of said heating strip, and wherein the heating in said heating strip is reduced or switched off when a level of icing in the vicinity of said heating strip has been reduced to below a threshold, such as been removed entirely in the vicinity of the heating strip.

## Patentansprüche

1. Windturbinenschaufel (10), die einen Saugseitenschalenabschnitt (38) und einen Druckseitenschalenabschnitt (36) aufweist, wobei sich jeder Schalenabschnitt zwischen einer Vorderkante (18) der Windturbinenschaufel und einer Hinterkante (20) der Windturbinenschaufel erstreckt, wobei sich die Windturbinenschaufel entlang einer Längsachse (L) vom Wurzelende (30) der Windturbinenschaufel zum Spitzenende (15) der Windturbinenschaufel erstreckt, wobei die Windturbinenschaufel Folgendes umfasst:
- ein Vorderkanten-Heizelement (19), das sich entlang mindestens eines Abschnitts der Vorderkante des Windturbinenschaufels erstreckt, wobei das Vorderkanten-Heizelement zum Enteisen eines entsprechenden Abschnitts einer Außenoberfläche der Vorderkante konfiguriert ist,
- eine erste Vielzahl von Heizstreifen (401-405, 801-804), wobei sich jeder Heizstreifen der ersten Vielzahl von Heizstreifen im Wesentlichen in Spannweitenrichtung der Windturbinenschaufel erstreckt, wobei die erste Vielzahl von Heizstreifen Teil eines ersten Schalenabschnitts der Windturbinenschaufel bildet, wobei die erste Vielzahl von Heizstreifen innerhalb des ersten Schalenabschnitts eingebettet oder so positioniert ist, dass sie zu einem Inneren der Windturbinenschaufel hin freiliegt, wobei der erste Schalenabschnitt der Druckseitenschalenabschnitt oder der Saugseitenschalenabschnitt ist, wobei die erste Vielzahl von Heizstreifen voneinander und von dem Vorderkanten-Heizstreifen in Schwenkrichtung beabstandet ist, wobei jeder Heizstreifen ein erstes Ende und ein zweites Ende aufweist, wobei das erste Ende näher am Spitzenende als das zweite Ende ist, wobei jeder Heizstreifen Carbonfasergarn und/oder Faserbündelmaterial (1001, 1101) umfasst, und
- eine Stromquelle, die so konfiguriert ist, dass sie jedem der ersten Vielzahl von Heizstreifen elektrische Leistung bereitstellt, um in dem jeweiligen Streifen Erwärmung zu erzeugen, wobei die Erwärmung durch das Carbonfasergarn und/oder das Faserbündelmaterial erzeugt wird,
wobei:
i. die erste Vielzahl von Heizstreifen einen ersten Heizstreifen und einen zweiten Heizstreifen umfasst, wobei der erste Heizstreifen näher an der Vorderkante als der zweite Heizstreifen ist, und wobei der erste Heizstreifen länger als der zweite Heizstreifen ist, oder
ii. in einer Richtung von der Vorderkante zur Hinterkante eine Länge jedes der ersten Vielzahl von Heizstreifen höchstens so lang wie oder kürzer als ein vorhergehender Heizstreifen der ersten Vielzahl von Heizstreifen ist.

2. Windturbinenschaufel nach Anspruch 1, wobei einer oder mehrere der ersten Vielzahl von Heizstreifen ein oder mehrere Carbonfasergarne und/oder Faserbündel (1001, 1101) umfassen, die sich vom ersten Ende zum zweiten Ende des Heizstreifens erstrecken.

3. Windturbinenschaufel nach Anspruch 1 oder 2, wobei sich einer oder mehrere der Carbonfasergarne und/oder Faserbündel, wie beispielsweise alle Carbonfasergarne und/oder Faserbündel, vom ersten Ende zum zweiten Ende des jeweiligen Heizstreifens in einer wellenförmigen Weise, wie beispielsweise in einer im Wesentlichen sinusförmigen Weise (1001), erstrecken.

4. Windturbinenschaufel nach einem der vorstehenden Ansprüche, wobei einer oder mehrere der ersten Vielzahl von Heizstreifen unidirektionales Carbonfasermaterial oder biaxiales Fasermaterial (1101) zum Erzeugen der Erwärmung umfassen.

5. Windturbinenschaufel nach einem der vorstehenden Ansprüche, wobei eine Länge jedes Heizstreifens höchstens 80 % einer Länge der Schaufel vom Wurzelende bis zum Spitzenende beträgt.

6. Windturbinenschaufel nach einem der vorstehenden Ansprüche, wobei die durch mindestens einen Heizstreifen der ersten Vielzahl von Heizstreifen erzeugte Erwärmung unabhängig von der durch einen anderen Heizstreifen der ersten Vielzahl von Heizstreifen erzeugten Erwärmung gesteuert werden kann.

7. Windturbinenschaufel nach einem der vorstehenden Ansprüche, wobei eine Gesamtausdehnung der ersten Vielzahl von Heizstreifen in Schwenkrichtung an einer ersten Position entlang der Längsachse der Schaufel mindestens 50 % einer Sehnenlänge an der ersten Position beträgt.

8. Windturbinenschaufel nach einem der vorstehenden Ansprüche, wobei das erste Ende jedes Heizstreifens der ersten Vielzahl von Heizstreifen an einem jeweiligen ersten Metallgewebe (915) anliegt und das zweite Ende jedes Heizstreifens an einem jeweiligen zweiten Metallgewebe (916) anliegt, wobei das jeweilige erste Metallgewebe und das jeweilige zweite Metallgewebe über den Heizstreifen elektrisch miteinander verbunden sind, und wobei das jeweilige erste Metallgewebe und das jeweilige zweite Metallgewebe mit der Stromquelle verbunden sind, um zu ermöglichen, dass in dem Heizstreifen durch Bereitstellen von elektrischer Leistung für den Heizstreifen Erwärmung erzeugt wird.

9. Windturbinenschaufel nach einem der vorstehenden Ansprüche, weiter umfassend Metallgewebe, wie beispielsweise Kupfergewebe, das zwischen den Heizstreifen und der Außenoberfläche des ersten Schalenabschnitts angeordnet ist.

10. Windturbinenschaufel nach einem der vorstehenden Ansprüche, wobei sowohl der Saugseitenschalenabschnitt als auch der Druckseitenschalenabschnitt eine Vielzahl von Heizstreifen wie in Anspruch 1 beschrieben umfasst.

11. Verfahren zur Herstellung einer Windturbinenschaufel nach einem der Ansprüche 1-10, umfassend:
- Ablegen in einer ersten Form von Material zum Bilden des ersten Schalenabschnitts, einschließlich Ablegen von Fasermaterial, dem Vorderkanten-Heizelement und der ersten Vielzahl von Heizstreifen,
- Einbetten des abgelegten Materials in ein Harz, wie beispielsweise durch Harzinfusion, und
- Verbinden jedes der Heizstreifen mit einer Stromquelle, um zu ermöglichen, dass in jedem der Heizstreifen Erwärmung bereitgestellt wird, indem eine Spannung über jeden Heizstreifen angelegt wird,
wobei:
i. die erste Vielzahl von Heizstreifen einen ersten Heizstreifen und einen zweiten Heizstreifen umfasst, wobei der erste Heizstreifen näher an der Vorderkante des ersten Schalenabschnitts als der zweite Heizstreifen ist, und wobei der erste Heizstreifen länger als der zweite Heizstreifen ist, oder
ii. in einer Richtung von der Vorderkante des ersten Schalenabschnitts zur Hinterkante des ersten Schalenabschnitts eine Länge jedes der ersten Vielzahl von Heizstreifen höchstens so lang wie oder kürzer als ein vorhergehender Heizstreifen der ersten Vielzahl von Heizstreifen ist.

12. Verfahren zum Enteisen einer Windturbinenschaufel nach einem der Ansprüche 1-10, wobei das Verfahren Folgendes umfasst:
- Bereitstellen von elektrischer Leistung für jeden der Heizstreifen in der ersten Vielzahl von Heizstreifen, um Erwärmung in den Heizstreifen zu erzeugen.

13. Verfahren nach Anspruch 12, wobei die in jedem der Heizstreifen erzeugte Erwärmung basierend auf einem Bild der Oberfläche der Schaufel gesteuert wird, das von einem Bilderkennungssystem erhalten wird, wobei in einem bestimmten Heizstreifen Erwärmung bereitgestellt wird, wenn basierend auf dem Bild aus dem Bilderkennungssystem bestimmt ist, dass Enteisen in der Nähe des genannten Heizstreifens erforderlich ist, und wobei die Erwärmung in dem Heizstreifen reduziert oder abgeschaltet wird, wenn ein Niveau von Vereisung in der Nähe des Heizstreifens unterhalb eines Schwellenwerts reduziert worden ist, wie beispielsweise vollständig in der Nähe des Heizstreifens entfernt worden ist.

## Revendications

1. Pale (10) d'éolienne présentant une portion (38) de coque côté aspiration et une portion (36) de coque côté pression, chaque portion de coque s'étendant entre un bord d'attaque (18) de la pale d'éolienne et un bord de fuite (20) de la pale d'éolienne, la pale d'éolienne s'étendant le long d'un axe longitudinal (L) depuis une extrémité (30) d'emplanture de la pale d'éolienne jusqu'à une extrémité (15) de pointe de la pale d'éolienne, la pale d'éolienne comprenant :
- un élément chauffant (19) de bord d'attaque s'étendant le long d'au moins une portion du bord d'attaque de la pale d'éolienne, l'élément chauffant de bord d'attaque étant configuré pour dégivrer une portion correspondante d'une surface extérieure du bord d'attaque,
- une première pluralité de bandes chauffantes (401-405, 801-804), chaque bande chauffante de la première pluralité de bandes chauffantes s'étendant dans une direction sensiblement d'envergure de la pale d'éolienne, la première pluralité de bandes chauffantes formant une partie d'une première portion de coque de la pale d'éolienne, la première pluralité de bandes chauffantes étant incorporées à l'intérieur de la première portion de coque ou positionnée de telle sorte qu'elles sont exposées à un intérieur de la pale d'éolienne, dans laquelle la première portion de coque est la portion de coque côté pression ou la portion de coque côté aspiration, la première pluralité de bandes chauffantes étant espacées les unes des autres et de la bande chauffante de bord d'attaque dans une direction de corde, chaque bande chauffante présentant une première extrémité et une seconde extrémité, la première extrémité étant plus proche de l'extrémité de pointe que la seconde extrémité, chaque bande chauffante comprenant un matériau de fil et/ou étoupe en fibres de carbone (1001, 1101), et
- une source d'alimentation configurée pour fournir de la puissance électrique à chacune de la première pluralité de bandes chauffantes afin de générer un chauffage dans chaque bande, ledit chauffage étant généré par le matériau de fil et/ou étoupe en fibres de carbone,
dans laquelle :
i. la première pluralité de bandes chauffantes comprend une première bande chauffante et une seconde bande chauffante, dans laquelle la première bande chauffante est plus proche du bord d'attaque que la seconde bande chauffante et dans laquelle la première bande chauffante est plus longue que la seconde bande chauffante, ou
ii. dans une direction allant du bord d'attaque au bord de fuite, une longueur de chacune de la première pluralité de bandes chauffantes est au plus aussi longue ou plus courte qu'une bande chauffante précédente de la première pluralité de bandes chauffantes.

2. Pale d'éolienne selon la revendication 1, dans laquelle une ou plusieurs de la première pluralité de bandes chauffantes comprennent un ou plusieurs fils et/ou étoupes en fibres de carbone (1001, 1101) s'étendant de la première extrémité à la seconde extrémité de la bande chauffante.

3. Pale d'éolienne selon la revendication 1 ou la revendication 2, dans laquelle un ou plusieurs des fils et/ou étoupes en fibres de carbone, tels que tous les fils et/ou étoupes en fibres de carbone, s'étendent de la première extrémité à la seconde extrémité de la bande chauffante respective d'une manière ondulée, par exemple d'une manière sensiblement sinusoïdale (1001).

4. Pale d'éolienne selon l'une quelconque des revendications précédentes, dans laquelle une ou plusieurs de la première pluralité de bandes chauffantes comprennent un matériau en fibres de carbone unidirectionnelles ou un matériau en fibres biaxiales (1101) pour générer le chauffage.

5. Pale d'éolienne selon l'une quelconque des revendications précédentes, dans laquelle une longueur de chaque bande chauffante est au plus égale à 80 % d'une longueur de la pale depuis l'extrémité d'emplanture jusqu'à l'extrémité de pointe.

6. Pale d'éolienne selon l'une quelconque des revendications précédentes, dans laquelle le chauffage généré par au moins une bande chauffante de la première pluralité de bandes chauffantes peut être commandé indépendamment du chauffage généré par une autre bande chauffante de la première pluralité de bandes chauffantes.

7. Pale d'éolienne selon l'une quelconque des revendications précédentes, dans laquelle une étendue totale de la première pluralité de bandes chauffantes dans une direction de corde à une première position le long de l'axe longitudinal de la pale est égale à au moins 50 % d'une longueur de corde à la première position.

8. Pale d'éolienne selon l'une quelconque des revendications précédentes, dans laquelle la première extrémité de chaque bande chauffante de la première pluralité de bandes chauffantes vient buter contre un premier treillis métallique respectif (915) et la seconde extrémité de chaque bande chauffante vient buter contre un second treillis métallique respectif (916),
le premier treillis métallique respectif et le second treillis métallique respectif étant ainsi connectés électriquement l'un à l'autre via la bande chauffante, et
dans laquelle le premier treillis métallique respectif et le second treillis métallique respectif sont connectés à la source d'alimentation pour permettre qu'un chauffage soit généré dans la bande chauffante en fournissant de la puissance électrique à la bande chauffante.

9. Pale d'éolienne selon l'une quelconque des revendications précédentes, comprenant en outre un treillis métallique, tel qu'un treillis en cuivre, disposé entre les bandes chauffantes et la surface externe de la première portion de coque.

10. Pale d'éolienne selon l'une quelconque des revendications précédentes, dans laquelle à la fois la portion de coque côté aspiration et la portion côté pression comprennent une pluralité de bandes chauffantes telles que décrites dans la revendication 1.

11. Procédé de fabrication d'une pale d'éolienne selon l'une des revendications 1 à 10, comprenant :
- l'empilage, dans un premier moule, d'un matériau pour former la première portion de coque, incluant l'empilage d'un matériau en fibres, de l'élément chauffant de bord d'attaque, et de la première pluralité de bandes chauffantes,
- l'incorporation du matériau empilé dans une résine, telle que par infusion de résine, et
- la connexion de chacune des bandes chauffantes à une source d'alimentation pour permettre qu'un chauffage soit fourni dans chacune des bandes chauffantes en appliquant une tension à travers chaque bande chauffante,
dans lequel :
i. la première pluralité de bandes chauffantes comprend une première bande chauffante et une seconde bande chauffante, dans lequel la première bande chauffante est plus proche du bord d'attaque de la première portion de coque que la seconde bande chauffante et dans lequel la première bande chauffante est plus longue que la seconde bande chauffante, ou
ii. dans une direction allant du bord d'attaque de la première portion de coque au bord de fuite de la première portion de coque, une longueur de chacune de la première pluralité de bandes chauffantes est au plus aussi longue ou plus courte qu'une bande chauffante précédente de la première pluralité de bandes chauffantes.

12. Procédé de dégivrage d'une pale d'éolienne selon l'une quelconque des revendications 1 à 10, le procédé comprenant :
- la fourniture de puissance électrique à chacune des bandes chauffantes de la première pluralité de bandes chauffantes pour générer de la chaleur dans les bandes chauffantes.

13. Procédé selon la revendication 12, dans lequel la chaleur générée dans chacune des bandes chauffantes est commandée sur la base d'une image de la surface de pale obtenue auprès d'un système de vision, dans lequel un chauffage est fourni dans une bande chauffante particulière s'il est déterminé, sur la base de l'image provenant du système de vision, qu'un dégivrage est requis dans le voisinage de ladite bande chauffante, et
dans lequel le chauffage dans ladite bande chauffante est réduit ou coupé lorsqu'un niveau de givrage dans le voisinage de ladite bande chauffante a été réduit en dessous d'un seuil, par exemple en ayant été entièrement retiré dans le voisinage de la bande chauffante.
